# EUROPÄISCHE PATENTSCHRIFT

(11) **EP 1 715 309 B1**
(45) Veröffentlichungstag und Bekanntmachung des Hinweises auf die Patenterteilung: **13.06.2012**
(21) Anmeldenummer: 06008043.9
(22) Anmeldetag: 19.04.2006
(51) Int. Cl.: G01G 13/04, G01G 13/12

(54) **Behälterwaage**
Hopper balance
Balance à réservoir

(30) Priorität: 19.04.2005 DE 102005018076
(43) Veröffentlichungstag der Anmeldung: 25.10.2006
(73) Patentinhaber: Librawerk Maschinenfabrik GmbH, 38104 Braunschweig (DE)
(72) Erfinder: Klein, Rolf, 38104 Braunschweig (DE)
(74) Vertreter: Grünecker, Kinkeldey, Stockmair & Schwanhäusser

(56) Entgegenhaltungen:
- EP-A- 0 744 597
- EP-A1- 0 533 968
- EP-A1- 0 656 530
- WO-A-00/42390
- DE-A1- 2 032 529
- DE-A1- 19 723 218
- DE-U- 1 892 814
- US-A- 5 667 108
- US-B1- 6 441 322

## Beschreibung

Die vorliegende Erfindung betrifft ein Verfahren zum Betreiben einer Behälterwaage mit einem mit einer Dosierklappe verschließbaren Vorbehälter und einem mit einer verschließbaren Entleerungsöffnung zum Zurückhalten einer dosierten Schüttgutmenge versehenen Lastgefäß, dem wenigstens eine Wägezelle zugeordnet ist, deren Signal zur Ermittlung der Gewichtsänderung des Lastgefäßes aufgrund eines durch eine von der Dosierklappe freigegebenen Stromöffnung fließenden Massestroms verwendet wird und bei dem das Lastgefäß bei Erreichen eines gewünschten Schüttgewichts entleert wird. Ferner betrifft die Erfindung einer Behälterwaage.

Behälterwaagen, wie sie beispielsweise aus der DE 1 892 814, der EP-1 181 738 oder der EP-0 184 510 bekannt sind, werden zum Abwägen eines vorbestimmten Schüttgewichtes eines schüttfähigen Gutes eingesetzt. Dieses ist in einem Vorbehälter aufgenommen und wird durch Betätigung der Dosierklappe auf ein Lastgefäß dosiert. Das Lastgefäß erfasst die Menge des zudosierten Schüttgutes und die Betätigung der Dosierklappe wird derart gesteuert, dass das gewünschte Schüttgewicht am Ende der Dosierung durch Entleeren des Lastgefäßes von der Behälterwaage abgeworfen werden kann. Die wenigstens eine Wägezelle des Lastgefäßes erfasst die Gewichtszunahme des Lastgefäßes und eine Auswerte- und Steuereinheit bzw. Auswertelogik schließt die Dosierklappe bei Erreichen des gewünschten Schüttgewichtes und öffnet die Entleerungsöffnung des Lastgefäßes.

Die Fachwelt ist bestrebt, die zur Bereitstellung eines gewünschten Schüttgewichtes durch die Waage erforderliche Zeit zu verkürzen, um möglichst viele Schüttgewichte pro Zeiteinheit beispielsweise für die Verpackung eines Schüttgutes in vorbestimmten Verpackungsmengen bereitzustellen. Bei der elektronischen Bewertung der Gewichtszunahme des Lastgefäßes besteht unter anderem das Problem, dass das Schüttgut aus einer gewissen Höhe auf das Lastgefäß fällt. Das Gewichtssignal der wenigstens einen Wägezelle ist danach zunächst stark impulsbelastet und eignet sich nicht unmittelbar zur Bestimmung der Gewichtszunahme des (ruhenden) Gewichtes des Lastgefäßes, aus dem in Kenntnis des Eigengewichtes des Lastgefäßes die Gewichtszunahme aufgrund von dosiertem Schüttgut ermittelt wird.

Ein weiteres Problem ist der Tatbestand, dass das Lastgefäß, angeregt durch die auftreffende Zusatzmasse (das Wägegut) Schwingungen ausführt, die es nach dem Stande der Technik erforderlich machen, vor der Massenbestimmung des Schüttgewichts zunächst die Zufuhr von Wägegut abzustellen, dann zu warten, bis die Schwingungen abgeklungen sind und erst dann die im Lastgefäß dosierte Masse zu bestimmen.

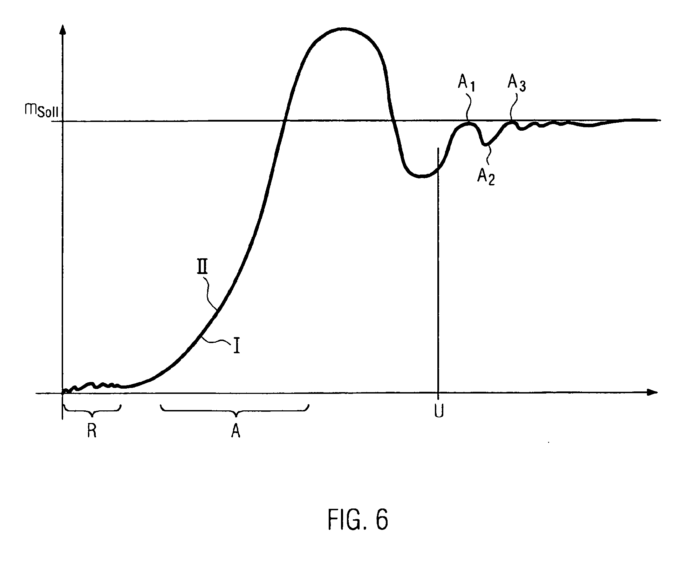

Zur genaueren und schnellen Dosierung des gewünschten Schüttgewichtes ist es im Stand der Technik bekannt, den Massestrom bei der Dosierung zunächst als Grobstrom zu dosieren und nach Dosieren des überwiegenden Gewichtsanteils des gewünschten Schüttgewichts auf einen Feinstrom umzustellen, dessen Massestrom gegenüber dem Grobstrom erheblich reduziert ist. Das um das Eigengewicht des Lastgefäßes reduzierte Gewichtssignal bei einem konventionellen Verfahren ist in Figur 6 dargestellt. Auf der Abszisse ist die Zeit, auf der Ordinate die durch die Wägezellen erfasste Gewichtserhöhung/Änderung des Lastgefäßes. Zu Beginn des Dosiervorgangs und nach einem unklaren Rauschen R erfolgt zunächst ein starker Anstieg des erfassten Gewichts, der aufgrund des Impulses der im Grobstrom auf das Lastgefäß auftreffenden Masse das Soll-Gewicht mₛₒₗₗ übersteigt. Aufgrund der vertikalen Schwingung des an den üblicherweise drei Wägezellen aufgehängten Lastgefäßes erfassen die Wägezellen eine relative Gewichtsentlastung. Es folgen weitere Schwingungen, die sich um das Soll-Gewicht einpendeln. Bei U wird von Grobstrom auf Feinstrom umgestellt. Die Dosierklappe wird eine vorbestimmte, maximale Zeit in der Feinstromstellung gehalten. Die Dosierklappe wird dann geschlossen, wenn ein bestimmtes, fest vorgegebenes oder durch einer Regler bestimmtes Abschaltniveau überschritten wird.

Das dosierte Schüttgewicht wird entleert, bevor das Signal der Wägezellen einen im wesentlichen konstanten Gewichtswert angibt. Die hierbei gewonnene Messkurve wird analysiert. Dabei wird aufgrund von einigen Amplitudenwerten A₁, A₂, A₃ der sich um den Soll-Wert einpendelnden Schwingung üblicherweise mit einem arithmetischen Verfahren ermittelt, mit welcher Genauigkeit das gewünschte Soll-Gewicht erreicht wurde. Stellt sich heraus, dass das Soll-Gewicht außerhalb der Toleranz unterschritten wurde, wird die Zeit für den Feinstrom einer darauffolgenden Dosierung eines Schüttgewichtes verlängert. Wird berechnet, dass das Soll-Schüttgewicht außerhalb der Toleranz überschritten wurde, wird die Zeit für den Feinstrom einer darauffolgenden Dosierung vermindert.

Bei dem aus dem Stand der Technik bekannten Verfahren wird die Dosierklappenstellung zur Dosierung des Schüttgewichtes dementsprechend gestellt und iterativ wird überprüft, inwieweit das eingestellte Profil für die Klappenstellung zur Dosierung des gewünschten Schüttgewichtes führt. Eine alternative, weit verbreitete Methode ist die Veränderung der Öffnungsdauer der Dosierklappe bei fest vorgegebener Öffnungsweite für Grob- und Feinstrom oder die Verwendung separater Klappen für Grob- und Feinstrom.

Die hierbei gewonnenen Kenntnisse gehen nicht unmittelbar als Korrektiv in die Dosierung des entsprechenden Schüttgewichtes der jeweiligen Messung ein. Vielmehr führt der Vergleich zwischen Ist- und Soll-Wert erst zur Korrektur der Dosierklappenstellung bei der Dosierung nachfolgender Schüttgewichte. Es ist aus dem Stand der Technik, beispielsweise der EP-0 744 597 bekannt, durch die Ausgestaltung der Dosierklappe den Übergang von Grobstrom auf Feinstrom möglichst kontinuierlich durchzuführen, um den auf das Lastgefäß aufgebrachten Impuls gleichmäßig von Grobstrom auf Feinstrom zu reduzieren und Schwingungen des Lastgefäßes zu vermindern. Allerdings führt diese Maßnahme lediglich zu einer gewissen Beruhigung der Schwingung des Lastgefäßes und danach zu einem schnelleren Abschwellen des Amplitudenbereiches nach Umschalten auf Feinstrom. Eine substantielle Verkürzung der zur Ermittlung des Ist-Gewichtes notwendigen Zeit kann mit dieser Maßnahme nicht erzielt werden.

WO 00/42390 offenbart ein Verfahren zum Betreiben einer Behälterwaage mit einem Vorbehälter mit zwei Dosierklappen. Die Behälter waage weist ein erstes, größeres Lastgefäß zur Befüllung mit einem groben Massenstrom und ein zweites, kleineres Lastgefäß zur Befüllung mit einem feinen Massenstrom auf_{.} Beiden Lastgefäßen sind jeweils mit einer Entleerungsklappe gegenüber einem gemeinsamen Behälter verschließbar und mit einer Wägezelle verbunden, deren Signal zur Ermittlung der Gewichtsänderung des jeweiligen Lastgefäßes verwendet wird. Das erste Lastgefäß wird für eine vorbestimmte Zeit gefüllt und in einem statischen Zustand abgewogen, wobei die Dorsierung weniger als die insgesamt von den zwei Lastgefäßen zu erreichende Dosierung ist. Erst nach der Messung wird das erste Lastgefäß entleert, so dass der gemeinsame Behälter gefüllt wird. Anhand der berechneten Differenz zwischen dem gemessenen, tatsächlichen Gewicht des ersten Lastgefäßes in dem statischen Zustand und der von den zwei Lastgefäßen gemeinsam zu erreichenden Dosierung wird das zweite Lastgefäß während der Entleerung des ersten Lastgefäßes mit einem feinen Massenstrom gefüllt. Nach diesem Füllvorgang wird das tatsächliche Gewicht des zweiten Lastgefäßes gemessen. Durch die Entleerung des zweiten Lastgefäßes in den gemeinsamen Behälter wird der gemeinsame Behälter mit der gewünschten Dosierung gefüllt. Obwohl die Messung durch das Verfahren beschleunigt wird, wonach die Füllung und die Entleerung mit einem groben und einem feinen Massenstrom in zwei Lastgefäßen iterativ durchgeführt werden, ist die dafür benötigte Anlage relativ aufwendig. Ferner lässt das Verfahren angesichts der benötigten Zeit auch Wünsche offen.

DE 2 032 529 offenbart ein Verfahren zum Betreiben einer Behälterwaage mit einem mit einem Kegel verschließbaren Vorbehälter und einem mit einer verschließbaren Entleerungsöffnung zum Zurückhalten einer dosierten Schüttgutmenge versehenen Lastgefäß, dem eine Wägezellen zugeordnet ist, deren Signal zur Ermittlung der Gewichtsänderung des Lastgefäßes aufgrund eines durch eine von der Dosierklappe freigegebenen Stromöffnung fließenden Massenstroms verwendet wird. Sobald das gewünschte Gewicht erreicht ist, wird der Vorbehälter verschlossen, um den Massenstrom abzusperren. Nach diesem Dosierungsvorgang wird das Lastgefäß mit dem gefüllten Material abgewogen und entleert.

Der vorliegenden Erfindung liegt das Problem zugrunde, ein verbessertes Verfahren zum Betreiben einer Behälterwaage anzugeben. Der vorliegenden Erfindung liegt ferner das Problem zugrunde, eine zur Durchführung des Verfahrens geeignete Behälterwaage anzugeben.

Im Hinblick auf das verfahrensmäßige Problem wird mit der vorliegenden Erfindung das gattungsgemäße Verfahren dadurch weitergebildet, dass das Lastgefäß zu einem Zeitpunkt entleert wird, der aufgrund von Signalen der Wägezelle ermittelt wird, die während der Dosierung desselben Schüttgewichtes erfasst werden. Bei dem erfindungsgemäßen Verfahren wird der Zeitpunkt der Lastgefäßentleerung danach nicht aufgrund von historischen Betrachtungen, d.h. Analyse von Signalen der Wägezellen aus der Vergangenheit bestimmt. Vielmehr wird für jede Dosierung eines Schüttgewichts während dieser Dosierung desselben Schüttgewichtes der Zeitpunkt der Lastgefäßentleerung ermittelt. Dieser Zeitpunkt wird ermittelt aufgrund von Signalen der Wägezellen. Es werden während der Dosierung mehrere zeitlich aufeinanderfolgende Signale der Wägezellen erfasst und einer Bewertung zugeführt.

Diese Bewertung kann eine historische Bewertung sein, bei welcher zu einem bestimmten Schüttgut bekannte Gewichtszunahmen des Lastgefäßes einschließlich etwaiger überlagerter impulsbedingter Anteile der Gewichtszunahme mit der aktuell gemessenen Gewichtszunahme verglichen wird. Ergibt sich innerhalb bestimmter Toleranzen eine Übereinstimmung zwischen dem gemessenen Gewichtsverlauf und der Gewichtszunahme aufgrund der aktuell erfassten Signale, wird der Zeitpunkt der Entleerung durch den hinterlegten Zeitpunkt gesetzt. Mit dieser Verfahrensführung ist es möglich, aufgrund des ersten signifikanten Anstiegs des Gewichts, welches das Soll-Gewicht übersteigt, eine Aussage zu treffen, inwieweit der derzeitige Dosiervorgang zum Zeitpunkt der Entleerung des Lastgefäßes zu einem Schüttgewicht geführt hat, welches innerhalb gewisser Toleranzgrenzen dem Soll-Schüttgewicht entspricht. Ergibt sich eine Abweichung zwischen den hinterlegten Werten für die Gewichtszunahme und der aktuellen Gewichtszunahme, wird der Zeitpunkt für die Lastgefäßleerung nicht durch den hinterlegten Wert bestimmt, sondern aufgrund einer Analyse von Amplitudenwerten beim Schwingen um den Soll-Wert. Die Entleerung des Lastgefäßes erfolgt bei dem erfindungsgemäßen Verfahren in jedem Fall noch bevor das Signal der Wägezelle als statisches d.h. konstantes eingeschwungenes Gewichtssignal bewertet werden kann.

Mit der vorliegenden Erfindung ist dementsprechend die Möglichkeit geschaffen worden, die aktuelle Dosierung eines Schüttgewichtes zu überprüfen und aufgrund dieser Überprüfung frühzeitig den Zeitpunkt der Entleerung exakt und abhängig von der jeweiligen aktuellen Dosierung zu bestimmen. Gemäß des erfindungsgemäßen Verfahrens wird die zeitliche Änderung des Lastgefäßgewichtes eines ersten aussagekräftigen Signals der Gewichtszunahme zur Bestimmung des Zeitpunktes verwendet. Als "aussagekräftiges Signal" im Sinne der Erfindung ist der erste signifikante Anstieg der Gewichtszunahme nach dem anfänglichen Rauschen zu verstehen, der in Figur 6 als das Soll-Gewicht übersteigender Kurvenabschnitt A dargestellt ist. Auf diesem Kurvenabschnitt werden vorzugsweise mehrere zeitlich hintereinander erfasste Signale der Wägezelle mit dem bekannten Verlauf verglichen.

Bei dem erfindungsgemäßen Verfahren werden Parameter, die die physikalischen Gegebenheiten beim Dosieren eines Schüttgewichtes auf das Lastgefäß den Einschwingvorgang des Lastgefäßes beschreiben, in einer Differenzialgleichung berücksichtigt und in einem Anpassprozess gleichzeitig und ständig wiederholt an die von den Wägezellen gelieferten Signalen angepasst. Das auf diese Weise ständig angepasste Rechenmodell wird zur Vorhersage des Endgewichtes und damit für die Bestimmung des Zeitpunkts der Entleerung verwendet. Der Entleerungszeitpunkt ist insbesondere durch denjenigen Zeitpunkt bestimmt, zu dem das Modell das Vorhandensein des Endgewichtes an dem Lastgefäß ermittelt. Durch die permanente Anpassung und Überprüfung der Modellrechnung mit der von den Wägezellen erfassten Signalen ist es möglich, sehr frühzeitig das Schüttgewicht innerhalb der zulässigen Toleranzen zu ermitteln. Üblicherweise kann mit einem entsprechend leistungsfähigen Prozessor das Schüttgewicht bereits im Abschnitt A, d.h. vor Erreichen des Maximums der Messkurve gemäß Figur 6, spätestens jedoch nach Durchlaufen des ersten signifikanten Minimums (Kurvenabschnitt unmittelbar vor U gemäß Figur 6) ermittelt und das Signal zur Entleerung des Lastgefäßes abgesetzt werden.

Praktische Versuche haben gezeigt, dass insbesondere der impulsbedingte Anteil der Gewichtszunahme zu Fehlinterpretationen der erfassten Signale der Wägezellen führen kann. Mit der vorliegenden Erfindung wurde ein Modell entwickelt, diese Störgröße abzuschätzen. Hierzu wird in der mathematischen Modellrechnung die Änderung der Fallhöhe des Schüttgutes von der Stromöffnung auf das Lastgefäß berücksichtigt. Bei dieser mathematischen Modellrechnung wird insbesondere der Abstand zwischen Stromöffnung und dem tiefsten Punkt des Lastgefäßes, an dem der Massestrom erstmalig auf das Lastgefäß auftritt, als Anfangsfallhöhe in Betracht gezogen. Die Änderung der Fallhöhe findet durch Berücksichtigung der Form des Lastgefäßes und des Schüttwinkels des Schüttgutes Eingang in die Modellrechnung.

Gemäß einem Beispiel der vorliegenden Erfindung wird die zeitliche Änderung des auf das Lastgefäß auftreffenden Impulses aufgrund der zu erwartenden Massestromänderung in der Strömöffnung abgeschätzt. Nachdem vorzugsweise aufgrund der ersten aussagekräftigen Signale der Wägezellen bei bekannter Anfangsfallhöhe und bekannter Klappenstellung der Anfangsimpuls ermittelt wurde, kann mit dem tatsächlichen Massestrom aufgrund der Klappenstellung eine Massenverminderung in dem Vorbehälter abgeschätzt und aufgrund dieser Abschätzung die zu erwartende Änderung des Massestroms und damit die zu erwartende zeitliche Änderung des Impulses bestimmt werden. Diese Vorhersage der Impulsänderung kann Eingang in die Modellrechnung finden und deren Genauigkeit erhöhen. Ein sich bei bekannter Dosierklappenstellung einstellender Volumenstrom wird hierbei vorzugsweise, gegebenenfalls unter Zuhilfenahme der einem Datenblatt zu dem Schüttgut entnommenen Fließgeschwindigkeit des Schüttguts und aufgrund der Dichtedaten in einen Massestrom umgerechnet. Mit diesen Informationen kann der Impuls des auf das Lastgefäß auftreffenden Massestroms berechnet werden.

Mit der sich zeitlich ändernden Fallhöhe, die zum einen durch den "Bodensatz" des Schüttgutes in dem Lastgefäß und zum anderen durch den sich auf diesen auftürmenden Schüttkegel vermindert wird, kann der Impuls und damit der impulsbedingte Anteil der Gewichtszunahme des Lastgefäßes zeitgenau während des Dosierens ermittelt werden. Diese so berechnete Störgröße wird bei der Ermittlung der tatsächlichen Gewichtszunahme des Lastgefäßes durch das in dem Lastgefäß befindliche Schüttgut berücksichtigt. Als tatsächliche Gewichtszunahme wird dasjenige Gewicht des Lastgefäßes verstanden, welches bei Abzug des Eigengewichts des Lastgefäßes durch das zu einem bestimmten Zeitpunkt in dem Lastgefäß aufgenommene ruhende Wägegut hervorgerufen würde.

Gemäß einem Beispiel der vorliegenden Erfindung wird aufgrund der zeitlichen Änderung des Lastgefäßgewichtes eines ersten aussagekräftigen Signals der Gewichtszunahme und mit dem Stell- oder Messsignal für die Dosierklappe ein flächenspezifischer Massenstrom in der Stromöffnung ermittelt. Bei diesem Beispiel wird anhand der tatsächlichen Messwerte der aktuelle Massestrom durch die Stromöffnung erfasst. Mit Kenntnis der Stellung der Dosierklappe und damit Kenntnis der Fläche der Stromöffnung wird dieser Massestrom in einen flächenspezifischen Massestrom umgerechnet. Mit diesem flächenspezifischen Massestrom ist es möglich, auch bei ändernder Stellung der Dosierklappe den sich ergebenden Massestrom und damit Impuls auf das Lastgefäß zu berechnen bzw. abzuschätzen. So erlaubt die Ermittlung des flächenspezifischen Massestromes eine genauere Vorhersage der Impulsänderung bei sich ändernder Stellung der Dosierklappe. Im Stand der Technik wird durch kontinuierliche Verminderung der Querschnittsfläche der Stromöffnung versucht, die Impulsänderung bei der Dosierung zu vergleichmäßigen. Hierbei sollen insbesondere abrupte Impulssprünge verhindert werden. Bei dem beispielhaften Verfahren wird der durch den Massestrom verursachte Impuls im Rahmen der Modellrechnung berücksichtigt, so dass auf eine aus Gründen einer schnellen Dosierung zu vermeidende Querschnittsverminderung der Stromöffnung zur Beruhigung des Messergebnisses verzichtet werden kann. Bei dem beispielhaften Verfahren kann vorzugsweise jede beliebige Stellungsänderung der Dosierklappe vorgenommen und aufgrund des ermittelten flächespezifischen Massestromes die sich dadurch ergebende Änderung des Impulses vorausschauend abgeschätzt werden,

Gemäß einem weiteren Beispiel wird der flächenspezifische Massestrom in Kenntnis der Stellung der Dosierklappe und mit schüttgutspezifischen Daten dazu verwendet, auf die Füllhöhe des Vorbehälters zu schließen. Zu den schüttgutspezifischen Daten gehören insbesondere die Fließgeschwindigkeit, die Dichte und gegebenenfalls die Neigung zur Brückbildung in Abhängigkeit von der Füllhöhe des Vorbehälters. Dieser Weiterbildung liegt die Erkenntnis zugrunde, dass sich der Massestrom abhängig von der Säule des Schüttgutes oberhalb der Stromöffnung in einem Vorbehälter, d.h. abhängig von der Füllhöhe eines solchen Behälters, ändert. Entsprechende Gesetzmäßigkeiten gelten auch für den Vorbehälter. Die Fließgeschwindigkeit in Abhängigkeit von der Füllhöhe des Vorbehälters ist vorzugsweise in einer Tabelle in einem Speicher einer Auswertelogik der Behälterwaage hinterlegt. Mit Kenntnis derjenigen Masse, die durch Dosieren aus dem Vorbehälter entnommen wird, kann eine Änderung der Füllhöhe des Vorbehälters ermittelt und damit ein sich ändernder flächenspezifischer Massestrom prognostiziert werden. Dieser findet vorzugsweise Eingang in die Berechnung impulsbedingter Anteile der Gewichtszunahme und führt dementsprechend zu einer genaueren Ermittlung der tatsächlichen Gewichtszunahme.

Gemäß einem weiteren Beispiel wird vorgeschlagen, auch die Reibung des Lastgefäßes und die damit einhergehende und von der wenigstens einen Wägezelle erfassten Gewichtsänderung zu ermitteln und bei der Bestimmung der tatsächlichen Gewichtszunahme zu berücksichtigen.

Der gemessene Wert für die Gewichtszunahme wird dabei um den durch Reibung hervorgerufenen Gewichtsanteil korrigiert.

Im Rahmen der Erfindung wurde festgestellt, dass diese Reibungsanteile bestmöglich durch wenigstens einen Reibungskoeffizienten berücksichtigt wird, der für das Verhalten des Lastgefäßes ermittelt oder bestimmt wird.

Zur Berücksichtigung der Reibung sind in der Modellrechnung Reibungstherme enthalten, die gleichzeitig mit allen anderen, die Einschwingvorgang des Lastgefäßes beschreibenden Parametern angepasst werden.

Zur weiteren Verkürzung der Zykluszeit der Behälterwaage wird gemäß einer weiteren bevorzugten Ausgestaltung der vorliegenden Erfindung vorgeschlagen, die Entleerungsöffnung zu öffnen, bevor der auf das Lastgefäß auftretende Massestrom zum Erliegen kommt. Bei dieser Verfahrensführung kommt der dem Lastgefäß zudosierte Massestrom zu keiner Zeit zum Erliegen und die Bestimmung des Schüttgewichtes erfolgt allein unter Berücksichtigung dynamischer, insbesondere impulsbedingter Gewichtsanteile. In gleicher Weise verkürzt die Zykluszeit die weitere bevorzugte Maßnahme, bei der die Entleerungsöffnung geschlossen wird, nachdem bereits die Dosierklappe die Stromöffnung freigegeben hat. Bei dieser Weiterbildung strömt bereits Massestrom des nächsten Schüttgewichtes in Richtung auf das Lastgefäß, während aus diesem noch das vorherige Schüttgewicht entleert wird. Die Entleerungsöffnung des Lastgefäßes ist aber zu einem Zeitpunkt abgeschlossen, zu dem der Massestrom auf das Lastgefäß auftrifft. Diese Fläche des Lastgefäßes wird regelmäßig durch wenigstens eine die Entleerungsöffnung verschließende Klappe gebildet, die in der Regel am tiefsten Punkt des Lastgefäßes angeordnet ist.

Bei dem erfindungsgemäßen Verfahren werden vorzugsweise über die gesamte Zeit des Dosierens von Schüttgut auf das Lastgefäß die vorerwähnten Berechnungen durchgeführt, wobei hierunter auch eine zyklische Durchführung verstanden werden kann. Parallel werden in vorbestimmten zeitlichen Abständen Signale der Wägezelle an die Steuer- und Auswerteeinheit übermittelt. Es erfolgt ein permanenter Abgleich zwischen gemessenen Ist-Werten der scheinbaren Gewichtszunahme und dem voraus berechneten Verhalten. Die scheinbare Gewichtszunahme ist diejenige Gewichtszunahme, die sich aufgrund der Signale der wenigstens einen Wägezelle ergibt und die impuls- und reibungsbelastet ist. Das vorausberechnete Verhalten ist Ergebnis der permanent angepassten Modellrechnung, die ebenfalls die Störgrößen, wie Schwingungsverhalten und Reibung berücksichtigt.

Sofern sich bei dem Vergleich zwischen scheinbarer Gewichtszunahme und vorausberechnetem Verhalten innerhalb vorbestimmter Toleranzen eine Abweichung ergibt, wird wenigstens ein Parameter der Berechnung noch während der Dosierung desselben Schüttgewichtes angepasst und eine erneute Modellrechnung durchgeführt. Dieses Fitting zwischen gemessenen und angepassten Größen kann mehrfach während der Dosierung desselben Schüttgewichtes erfolgen. Das Fitting bedient sich insbesondere der elementaren Differenzialgleichungen zum Impulserhaltungssatz, wobei Reibkräfte und deren zeitliche Entwicklung in entsprechenden Differenzialgleichungen berücksichtigt werden. Praktische Versuche haben gezeigt, dass eine Anpassung der Parameter der Reibkräfte nicht oder nur zu einem geringen Grad zu einem besseren Fit führt und so wird insbesondere ein Parameter angepasst, der Einfluss auf die Berechnung der Fallhöhe des Massestromes hat.

Eine Behälterwaage, die sich insbesondere zur Durchführung des vorerwähnten Verfahrens eignet und die eine genaue und schnelle Einstellung des Massestromes ermöglicht, hat einen getriebelos an die Dosierklappe angeschlossenen Dosierklappenantrieb. Bei der Vorrichtung kommt dementsprechend vorzugsweise eine Dosierklappe zum Einsatz, wie sie aus dem Stand der Technik bekannt ist und welche ein oder mehrere verschwenkbar, insbesondere an dem Vorbehälter befestigte bewegliche Klappenelemente umfasst. Im Hinblick auf eine möglichst einfache Ausgestaltung ist vorzugsweise eine einzige Dosierklappe vorgesehen. Die Dosierklappe hat eine Antriebswelle, die direkt, d.h. ohne Zwischenschaltung eines Getriebes mit dem Motor verbunden ist. Zwar kann zum Ausgleich von Fertigungstoleranzen und mit Rücksicht auf eine einfache Montage eine Kupplung zwischen der Antriebswelle des Dosierklappenantriebs und der mit der Dosierklappe verbundenen Welle vorgesehen sein. Diese Kupplung ist aber insbesondere eine kraftschlüssige Kupplung, die keinen radialen Schlupf zwischen der Dosierklappenwelle und der Welle des Dosierklappenantriebs zulässt. Der Antrieb wird durch einen Motor gebildet, der ein hohes Drehmoment bereitstellt und der sich mit hoher Genauigkeit steuern lässt, vorzugsweise sich mit hoher Signalrate ansteuern lässt. In der Praxis hat sich beispielsweise ein Torque-Motor bewährt, der mit 50 MHz angesteuert wird.

Aufgrund der Steuerung des Motors kann unmittelbar auf die Stellung der Dosierklappe und damit auf den wirksamen Querschnitt der Stromöffnung geschlossen werden. Alternativ oder zur Erhöhung der Redundanz zusätzlich kann eine der Dosierklappe zugeordnete Klappenstellungsmesseinrichtung vorgesehen sein, welche mit hoher Genauigkeit die Winkelstellung der Dosierklappe erfasst. Die an der Behälterwaage vorgesehene Auswertelogik kann bei Abweichungen zwischen dem Stellwert für den Dosierklappenantrieb und dem Messwert der Klappenstellungsmesseinrichtung auf ein Verklemmen der Dosierklappe schließen und entsprechende Fehlermeldungen bzw. -Signale abgeben.

Eigene Untersuchungen, die zu der vorliegenden Erfindung geführt haben, haben ergeben, dass bei einer Aufhängung des Lastgefäßes an vier Wägezellen auf Querlenker und dergleichen verzichtet werden kann. Mit einem Querlenker wird im Stand der Technik bei einer Aufhängung an drei Wägezellen die Schwingungsverhalten des Lastgefäßes gedämpft.. Die Behälterwaage weist dementsprechend ein frei aufgehängtes Lastgefäß auf, d.h. das Lastgefäß ist nicht über Querlenker oder Dämpfer oder andere Einrichtungen mit dem Maschinengestell verbunden, welche eine genaue Erfassung der Gewichtsänderung behindern und eine mathematische Abbildung der tatsächlichen Vorgänge des Lastgefäßes mit physikalisch- technisch begründeten Gleichungen erschweren. Die vier Wägezellen stellen die einzigen tragenden Verbindungen zwischen dem Lastgefäß und dem Maschinengestell dar.

Es hat sich jedoch im Hinblick auf eine möglichst genaue Berechnung der Impulsanteile als vorteilhaft erwiesen, diese zumindest zum Ende der Befüllung zu minimieren und so wird gemäß vorgeschlagen, das Lastgefäß in Richtung auf die Stromöffnung hin verjüngt auszubilden. Das Lastgefäß hat beispielsweise einen markanten Halsbereich, so dass zum Ende der Befüllung bei abnehmenden Massestrom gleichwohl der Pegel des Schüttgutes in dem Lastgefäß erheblich steigt und auch der durch kleine Masseströme verursachte Impuls dadurch merklich reduziert wird. Die Korrektur um diesen betragsmäßig stark verminderten impulsbedingten Anteil der Gewichtszunahme kann konsequenterweise auch bei einer gewissen Abweichung zwischen der Modellrechnung und der Realität lediglich nur zu geringen Gesamtfehlern bei der Ermittlung der tatsächlichen Gewichtszunahme des Lastgefäßes führen.

Zur weiteren Reduktion der Fehler durch ungenaue mathematische Korrektur wird vorgeschlagen, das Lastgefäß höhenverschieblich relativ zu der Stromöffnung vorzusehen. Bei einer höhenverschieblichen Anordnung des Lastgefäßes relativ zu der Stromöffnung, d.h. relativ zu dem Vorbehälter ist es möglich, abhängig von der Schüttdichte des zu verarbeitenden Materials bzw. des gewünschten Schüttgewichtes das Lastgefäß so relativ zu der Stromöffnung anzuordnen, dass die Fallhöhe des Schüttgutes zu Ende des Dosiervorganges minimiert ist. Auch diese Maßnahme führt zu einer weiteren Verringerung des Impulses am Ende der Dosierung des Schüttgewichtes, die im Hinblick auf eine exakte mathematische Bestimmung des aktuell dosierten Schüttgewichtes von besonderer Bedeutung sein kann. Die Fallhöhe tendiert vorzugsweise zum Ende des Dosiervorganges gegen Null.

Im Rahmen praktischer Versuche wurde ermittelt, dass eine Ausgestaltung zu bevorzugen ist, bei der stromaufwärts der Dosierklappe in einem Zuführkanal zwischen einem Vorratssilo und dem Behälter eine Entlüftungsöffnung vorgesehen ist, durch welche mit dem strömenden Schüttgut verschleppte Luft entweichen kann. Als ein kompressibles Medium kann diese in dem Vorbehälter enthaltene Luft eine gleichmäßige Abgabe des Schüttgutes durch die Stromöffnung behindern.

Es wird ferner vorgeschlagen einen Prozessor vorzusehen, der zu jeder einzelnen Wägezelle einen separaten Kanal hat und der Bestandteil der vorerwähnten Auswertelogik der Behälterwaage ist. Im Gegensatz zum gattungsbildenden Stand der Technik, bei dem die einzelnen Signale der Wägezellen als Summensignal der weiteren Bearbeitung zugeführt werden, erfolgt bei der bevorzugten Weiterbildung die Verarbeitung der Wägezellensignale jeweils für sich und separat, was die Möglichkeit offen lässt, durch einzelne Wägezellen hervorgerufene Artefakte besser zu erkennen und separat von gegebenenfalls ebenfalls fehlerbehafteten Signalen der anderen Wägezellen zu behandeln, beispielsweise zu filtern.

Weitere Einzelheiten, Vorteile und Merkmale der vorliegenden Erfindung ergeben sich aus der nachfolgenden Beschreibung in Verbindung mit der Zeichnung. In dieser zeigen:
- Figur 1: ein Ausführungsbeispiel einer zur Durchführung des Verfahrens geeigneten Behälterwaage in einer Seitenansicht_{;}
- Figur 2: das in Figur 1 gezeigte Ausführungsbeispiel in einer weiteren Seitenan- sicht rechtwinklig zu der in Figur 1 dargestellten Seitenansicht;
- Figur 3: das in den Figuren 1 und 2 gezeigte Ausführungsbeispiel in einer Draufsicht;
- Figur 4: die Dosierklappe des in den Figuren 1 bis 3 gezeigten Ausführungsbeispiels in einer Seitenansicht;
- Figur 5: die in Figur 4 gezeigte Dosierklappe in einer Draufsicht; und
- Figur 6: die Änderung der scheinbaren Gewichtszunahme des Lastgefäßes aufgrund von Signalen der Wägezellen.

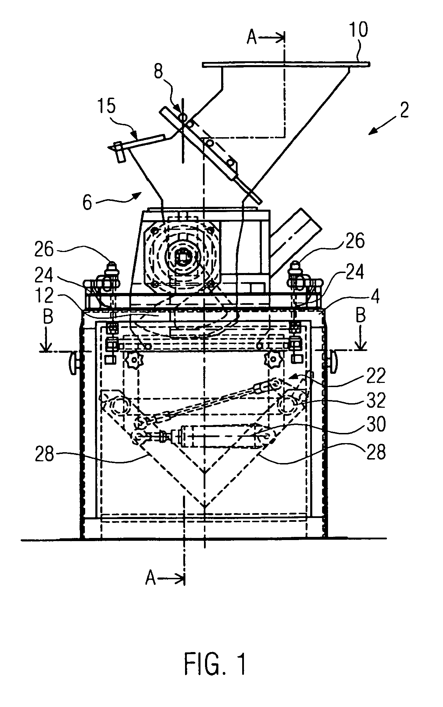

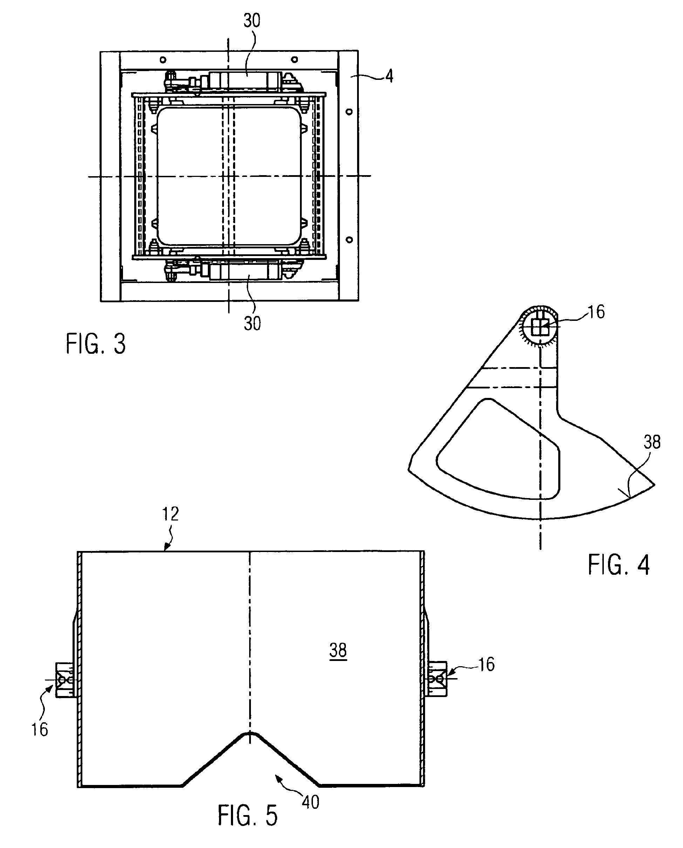

In den Figuren 1 bis 3 ist ein Ausführungsbeispiel einer Behälterwaage 2 gezeigt, die sich zur Durchführung des erfindungsgemäßen Verfahrens eignet und die ein Maschinengestell 4 umfasst, welches einen Vorbehälter 6 trägt, der mit einem Schieber 8 zur Veränderung des wirksamen Strömungsquerschnitts des Vorbehälters 6 ausgestattet ist und an seinem oberen Rand einen Befestigungsflansch 10 zur Befestigung an ein nicht dargestelltes Vorratssilo oder einen von dem Vorratssilo abgehenden Zuführkanal zu der Behälterwaage hin versehen ist. Am unteren Ende des Vorbehälters 6 befindet sich eine Dosierklappe 12, die drehbar an dem Maschinengestell 4 gelagert ist und im Detail den Figuren 4 und 5 entnommen werden kann. Die Dosierklappe 12 ist so ausgestaltet, dass eine am unteren Ende des Vorbehälters 6 vorgesehene Stromöffnung 13 in der in den Figuren 1 bis 3 gezeigten Verschlussstellung der Dosierklappe 12 verschlossen ist.

Zwischen dem Schieber 8 und der Dosierklappe 12 befindet sich eine verschließbare Entlüftungsöffnung 15, durch die beim Zuführen durch Schüttgut aus einem Silo mitverschleppte Luft entweichen kann, bevor sich das Schüttgut in Strömungsrichtung vor der Dosierklappe 12 anlagert.

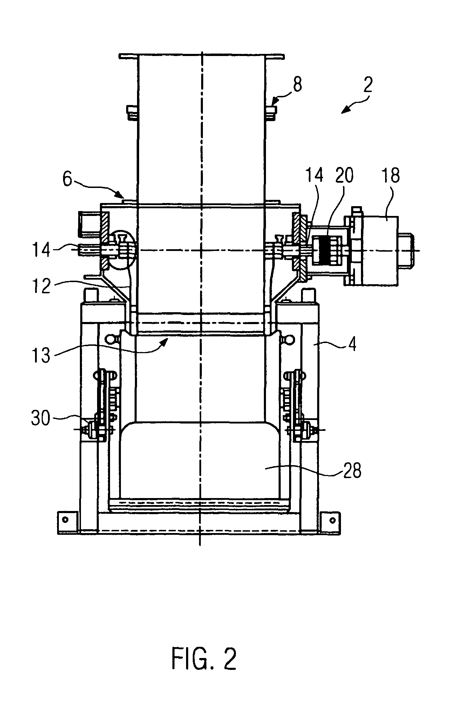

Über Lagerzapfen 14, die verdrehfest in entsprechende Bohrungen 16 der Dosierklappe 12 eingreifen, ist die Dosierklappe 12 verschwenkbar an dem Maschinengestell 4 gelagert. In Verlängerung des in Figur 2 auf der rechten Seite dargestellten Lagerzapfens 14 befindet sich ein Dosierklappenantrieb 18, der vorliegend durch einen Torque-Motor gebildet ist, der unter Zwischenschaltung einer kraftschlüssig den Lagerzapfen 12 mit der Antriebswelle des Dosierantriebes 18 verbindenden Kupplung 20 an der Lagerzapfen 14 der Dosierklappe 14 angeschlossen ist.

An der dem Dosierklappenantrieb 18 gegenüberliegenden Seite ist der Lagerzapfen 14 aus dem Maschinengehäuse herausgeführt und wirkt mit einer berührungsfreien Klappenstellungsmesseinrichtung 21, beispielsweise einem Encoder zusammen, der die Winkelstellung der Dosierklappe 12 erfasst und an die Auswertelogik bzw. Steuerungseinrichtung der Behälterwaage 2 weiterleitet.

Den Vorbehälter 6 unterseitig umfänglich umgebende Wangen haben eine an die Form der Dosierklappe 12 angepasst Randkontur und erstrecken sich jeweils mit geringem Abstand zu der durch die Dosierklappe 12 gebildeten Verschlussfläche für die Stromöffnung 13. In Fallrichtung unterhalb der Stromöffnung 13 befindet sich ein Lastgefäß 22. Das Lastgefäß 22 ist über vier Stangen 24 unter Zwischenschaltung von vier Wägezellen 26 an dem Maschinengestell 4 aufgehängt. Die Wägezellen 26 befinden sich jeweils in den Ecken des in der Draufsicht mit rechteckiger Grundfläche ausgebildeten Lastgefäßes 22.

Das Lastgefäß 22 hat in seinem oberen Teil einen im zylindrischen Aufnahmebehälter mit rechteckiger Grundfläche, der unterseitig in der Seitenansicht nach Figur 1 spitz zulaufend ausgebildet ist. In diesem Bereich wird der Abschluss des Lastgefäßes 22 durch zwei verschwenkbar gelagerte Verschlussklappen 28 gebildet, die über pneumatische Stellzylinder 30 zur Entleerung des Lastgefäßes 22 betätigbar sind. Durch ein an dem Maschinengestell angeschlossenen Querlenker 32 wird diese Beweglichkeit der Verschlussklappen 28 vorbestimmt.

In Fallrichtung unterhalb der Verschlussklappen 28 befindet sich üblicherweise ein Trichter zur Aufnahme des von dem Lastgefäß 22 entleerten Füllgewicht zur Weiterleitung an eine Verpackungseinrichtung, beispielsweise eine Versackungseinrichtung.

Wie den Figuren 4 und 5 zu entnehmen ist, weist die Dosierklappe 12 seitliche Wangen 34 auf, die zur Verminderung der beweglichen Masse der Dosierklappe 12 mit einer Aussparung 36 versehen ist. Der mit einem Radius um die Bohrung 16 verlaufende Boden 38 der Dosierklappe hat eine V-förmige Aussparung 40, die mittig von dem vorderen Längsrand der Dosierklappe 12 abgeht. Zum Dosieren eines Schüttgewichtes wird die Dosierklappe 12 zyklisch von der in den Figuren 1 bis 3 gezeigten Ausgangsstellung in eine relativ zu der Darstellung in Figur 1 nach rechts verlagerte Position verschwenkt. In dieser Position kann Schüttgut durch die V-förmige Aussparung 40, die die Stromöffnung 13 ausbildet, zu dem Lastgefäß 22 fließen. Durch die Wägezellen 26 wird kontinuierlich die Gewichtsveränderung gemessen. Das Schüttgut sammelt sich zunächst in dem V-förmigen Grund des Lastgefäßes 22 an und bildet hierbei nach Ausbildung eines gewissen Bodensatzes mit dem Schüttwinkel des dosierten Schüttgutes einen Schüttkegel vorbestimmbarer Geometrie aus. Mit zunehmender Befüllung des Lastgefäßes 22 sinkt die Fallhöhe des Stückgutes, d.h. der Abstand zwischen der Stromöffnung 13 und der darunter liegenden, durch den Schüttkegel gebildeten Oberfläche des Schüttgutes. Aufgrund der Signale der Wägezellen 26 und der mathematischen Modellrechnung zur Fallhöhe wird aufgrund des Messsignals eine impulsbereinigte Gewichtszunahme ermittelt. Zusätzlich können Reibungsanteile herausgerechnete werden, die dadurch hervorgerufen werden, dass das Lastgefäße 22 in vertikaler Richtung schwingt. Sofern anhand der Modellrechnungen und der Signale der Wägezellen 26 ein Zeitpunkt bestimmt werden kann, zu dem unter Berücksichtigung einer etwaigen Verminderung der wirksamen Stromöffnung 13 das gewünschte Schüttgewicht erreicht wird, werden zu diesem Zeitpunkt die Verschlussklappen 28 aufgrund eines Steuerungssignals einer Steuerung geöffnet. Zum Zeitpunkt kann noch Schüttgut zwischen der Oberfläche des Schüttkegels und der Stromöffnung 13 fließen. Durch Öffnen der Verschlussklappen 28 wird das Lastgefäß 22 entleert. Zum Ende der Entleerung werden die Verschlussklappen 28 geschlossen. Bereits vorher kann die Stromöffnung 13 durch Betätigen der Dosierklappe 12 geöffnet und Schüttgut für den nächsten Dosiervorgang eingebracht worden sein.

Bei Durchführung des erfindungsgemäßen Verfahrens wird bei jeder Dosierung eines Schüttgewichtes die mathematische Modellrechnung durchlaufen. Zu Beginn der Dosierung und bei dem Rauschen R gemäß Figur 6 werden zunächst die Parameter aufgrund von Anfangsbedingungen, gegebenenfalls mit Erfahrungswerten gesetzt. Bei einem ersten signifikanten Anstieg der scheinbaren Gewichtszunahme (Kurvenabschnitt A gemäß Figur 6) werden mehrere aufeinander folgende Messwerte gewonnen. Diese Zeitpunkte sind in Figur 6 beispielhaft mit I und II gekennzeichnet. Die gemessenen Signale der Wägezellen 26 werden mit den Ergebnissen der Modellrechnung verglichen. Ergibt sich eine außerhalb einer Toleranz liegenden Abweichung zwischen dem durch die Wägezellen erfassten scheinbaren Gewicht und dem berechneten Gewicht bzw. der berechneten Gewichtszunahme, so erfolgt eine Anpassung von Parametern, die das Einschwingverhalten des Lastgefäßes bei der Dosierung beschreiben. Eine solche Überprüfung und Anpassung erfolgt ständig und wiederholt, bis im Rahmen der Modellrechnung, da Übereinstimmung zwischen scheinbarem Gewicht und berechnetem Gewicht nach Abzug der Störgrößen für das Schwingungsverhalten das Erreichen des tatsächlichen Schüttgewichtes innerhalb vorgegebener Toleranzen ermittelt wurde. Daraufhin wird das Signal zur Entleerung des Lastgefäßes gegeben.

Praktische Versuche haben gezeigt, dass bereits bei Erreichen des Maximums der Kurve für die scheinbare Gewichtszunahme des Dosieren des gewünschten Schüttgewichts aufgrund der Modellrechnung bestimmt werden kann. Das berechnete Schüttgewicht kann hierbei auch Fraktionen umfassen, welche bereits die Stromöffnung passiert haben, die jedoch noch nicht auf dem gefüllten Lastgefäß aufgetroffen sind oder auf diesem zur Ruhe gekommen sind.

Das erfindungsgemäße Verfahren erlaubt es, den Zeitpunkt der Entleerung des Lastgefäßes 22 aufgrund von Signalen zu bestimmen, die während der Dosierung desselben Schüttgewichtes erfasst werden. Kann anhand von Kontrollen festgestellt werden, dass die Signale der Wägezellen dem berechneten Verlauf der Gewichtszunahme des Lastgefäßes 22 und insbesondere dem durch Berechnung prognostizierten Verlauf der tatsächlichen Gewichtszunahme des Lastgefäßes 22 entspricht, so wird aufgrund der prognostizierten Gewichtszunahme der Zeitpunkt der Entleerung des Lastgefäßes bestimmt und das Lastgefäß 22 zum Zeitpunkt entleert.

### Bezugszeichenliste

- 2: Behälterwaage
- 4: Maschinengestell
- 6: Vorbehälter
- 8: Schieber
- 10: Befestigungsflansch
- 12: Dosierklappe
- 13: Stromöffnung
- 14: Lagerzapfen
- 15: Entlüftungsöffnung
- 16: Bohrung
- 18: Dosierantrieb
- 20: Kupplung
- 21: Klappenstellungsmesseinrichtung
- 22: Lastgefäß
- 24: Stange
- 26: Wägezelle
- 28: Verschlussklappe
- 30: Stellzylinder
- 32: Querlenker
- 34: Wange
- 36: Aussparung
- 38: Boden
- 40: V-förmige Aussparung

## Patentansprüche

1. Verfahren zum Betreiben einer Behälterwaage (2) mit einem mit einer Dosierklappe (12) verschließbaren Vorbehälter (6) und einem mit einer verschließbaren Entleerungsöffnung zum Zurückhalten einer dosierten Schüttgutmenge versehenen Lastgefäß (22), dem wenigstens eine Wägezelle (26) zugeordnet ist, deren Signal zur Ermittlung der Gewichtsänderung des Lastgefäßes (22) aufgrund eines durch eine von der Dosierklappe (12) freigegebenen Stromöffnung (13) fließenden Massestroms verwendet wird und bei dem das Lastgefäß (22) bei Erreichen eines gewünschten Schüttgewichts entleert wird, wobei **dadurch gekennzeichnet,**
**dass** das Lastgefäß (22) zu einem Zeitpunkt entleert wird, der aufgrund von Signalen der Wägezelle (26) ermittelt wird, die während der Dosierung desselben Schüttgewichtes erfasst werden, bevor die Signale der Wägezelle (26) als statisches eingeschwungenes Gewichtssignal bewertet werden können, und dass die zeitliche Änderung des Lastgefäßgewichtes eines ersten aussagekräftigen Signals der Gewichtszunahme zur Vorbestimmung des Zeitpunktes verwendet wird **dadurch gekennzeichnet dass** das erste
aussagekräftige Signal der erste signifikante das Sollgewicht übersteigende Anstieg der Gewichtszunahme nach dem anfänglichen Rauschen ist.

2. Verfahren nach Anspruch 1, **dadurch gekennzeichnet, dass** die zeitliche Änderung des Impulses aufgrund der zu erwartenden Massestromänderung in der Strömöffnung (13) abgeschätzt wird.

3. Verfahren nach Anspruch 1 oder 2, **dadurch gekennzeichnet, dass** die Entleerungsöffnung geöffnet wird, bevor der auf das Lastgefäß (22) auftreffende Massestrom zum Erliegen kommt.

4. Verfahren nach einem der vorherigen Ansprüche, **dadurch gekennzeichnet, dass** die Entleerungsöffnung geschlossen wird, nachdem bereits die Dosierklappe (12) die Stromöffnung (13) freigegeben hat.

## Claims

1. Method for operating hopper scales (2) having a feed hopper (6) which can be closed by a metering flap (12) and having a load vessel (22) provided with a closable discharge opening for retaining a metered amount of bulk material, to which load vessel (22) at least one load cell (26) is assigned, the signal of which is used to determine the change in weight of the load vessel (22) based on a mass flow flowing through a flow opening (13) released by the metering flap (12), and in which the load vessel (22) is emptied when a desired bulk weight is reached, wherein the load vessel (22) is emptied at a point in time which is determined based on signals of the load cell (26) which are detected during the metering of the same bulk weight before the signals of the load cell (26) can be evaluated as a static steady state signal of weight, and wherein the time rate of change of the load vessel weight of a first meaningful signal of the increase in weight is used to predetermine the point in time, **characterised in that** the first meaningful signal is the first significant rise (A) in the weight increase exceeding the nominal weight after the initial noise.

2. Method according to Claim 1, **characterised in that** the time rate of change of the impulse is evaluated based on the mass flow change to be expected in the flow opening (13).

3. Method according to Claim 1 or 2, **characterised in that** the discharge opening is opened before the mass flow striking the load vessel (22) comes to a standstill.

4. Method according to any one of the preceding claims, **characterised in that** the discharge opening is closed after the metering flap (12) has already released the flow opening (13).

## Revendications

1. Procédé pour faire fonctionner une balance à réservoir (2) comprenant un réservoir primaire (6) qui est apte à être fermé à l'aide d'un volet de dosage (12), et un récipient de charge (22) qui est pourvu d'une ouverture de vidage apte à être fermée et destinée à retenir une quantité dosée de produit en vrac, et auquel est associée au moins une cellule de pesage (26) dont le signal est utilisé pour déterminer la variation de poids dudit récipient de charge (22) sur la base d'un écoulement de masse qui s'écoule par une ouverture d'écoulement (13) dégagée par le volet de dosage (12), selon lequel le récipient de charge (22) est vidé quand un poids déversé souhaité est atteint, étant précisé que le récipient de charge (22) est vidé à un moment qui est déterminé sur la base de signaux de la cellule de pesage (26) qui sont détectés pendant le dosage du poids déversé, avant que les signaux de la cellule de pesage (26) ne puissent être évalués comme un signal de poids stabilisé statique, et que la variation dans le temps du poids du récipient de charge d'un premier signal révélateur de l'augmentation de poids est utilisée pour prédéfinir le moment,
**caractérisé en ce que** le premier signal révélateur est constitué par la première montée significative (A) de l'augmentation de poids qui dépasse le poids théorique, après le bruit initial.

2. Procédé selon la revendication 1, **caractérisé en ce que** la variation dans le temps de l'impulsion est estimée sur la base de la variation d'écoulement de masse à prévoir dans l'ouverture d'écoulement (13).

3. Procédé selon la revendication 1 ou 2, **caractérisé en ce que** l'ouverture de vidage s'ouvre avant que l'écoulement de masse qui arrive sur le récipient de charge (22) ne s'arrête.

4. Procédé selon l'une des revendications précédentes, **caractérisé en ce que** l'ouverture de vidage se ferme après que le volet de dosage (12) a dégagé l'ouverture d'écoulement (13).
